# EUROPEAN PATENT APPLICATION

(11) **EP 4 475 480 A1**
(43) Date of publication of application: **11.12.2024**
(21) Application number: 24177001.5
(22) Date of filing: 21.05.2024
(51) Int. Cl.: H04L 9/32, G06F 21/64, H04N 21/835

(54) **CERTIFIED CONTENT GENERATION APPARATUS, CONTROL METHOD THEREFOR, AND CONTROL PROGRAM THEREFOR**

(30) Priority: 09.06.2023 JP 2023095412; 14.03.2024 JP 2024040109
(71) Applicant: CANON KABUSHIKI KAISHA, Tokyo 146-8501 (JP)
(72) Inventor: UENO, Daiyu, Tokyo, 146-8501 (JP)
(74) Representative: TBK

(57) **Abstract**

PROBLEM TO BE SOLVED: To guarantee authenticity of generation time of a content.

SOLUTION: A content generation apparatus (100) includes a unit (61) that receives an instruction to generate a content (600) from a user, a unit (70a, S301, S319) that receives an instruction to change an authenticity guaranteeing mode for guaranteeing authenticity of the content to a valid state or an invalid state from the user, and a controller (50, S507) that controls to generate a content including generation time (602) of the content based on reference time that has been adjusted using time information received from an outside in a case where an instruction to change the authenticity guaranteeing mode from the invalid state to the valid state is received and an instruction to generate the content is received.

## Description

The present invention relates to a content generation apparatus, a control method therefor, and a control program therefor.

In recent years, information sharing via the Internet has been actively performed, and anyone can disclose and transmit various information to unspecified persons. Further, a digital image can be processed in various ways. In such a situation, information may be transmitted from an unreliable source and disclosed information may be tampered illegally. Therefore, a technique for guaranteeing authenticity of disclosed/transmitted information is required.

For example, Japanese Laid-Open Patent Publication No. 2008-5421 discloses such a technique for guaranteeing authenticity of disclosed/transmitted information. A digital camera disclosed in this publication has a function of adding data for certifying originality of image data obtained by photographing, specifically, a hash value of the image data including an image itself and additional information such as a photographing date and time of the image, to an image file including the image data. This enables to determine whether the image data included in the image file has been changed from that at the photographing time by using the hash value given to the image file.

However, the technique of the above-described publication allows a user to easily falsifies the photographing date and time of the image data by manually changing a time setting of the digital camera to arbitrary time. As described above, the conventional technique cannot guarantee authenticity at generation time of a content generated by a content generation apparatus such as a digital camera.

The present invention provides a content generation apparatus capable of guaranteeing authenticity of generation time of a content, a control method therefor, and a control program therefor.

Accordingly, a first aspect of the present invention provides a content generation apparatus as specified in claims 1 to 13.

Accordingly, a second aspect of the present invention provides a control method for a content generation apparatus as specified in claim 14.

Accordingly, a third aspect of the present invention provides a control program for a content generation apparatus as specified in claim 15.

According to the present invention, the authenticity of the generation time of the content is guaranteed.

Further features of the present invention will become apparent from the following description of exemplary embodiments with reference to the attached drawings.

### BRIEF DESCRIPTION OF THE DRAWINGS

FIG. 1A and FIG. 1B are external views showing a digital camera as a content generation apparatus according to an embodiment.
FIG. 2 is a block diagram showing a configuration example of the digital camera shown in FIG. 1A and FIG. 1B.
FIG. 3 is a flowchart showing a procedure of a photographing control process executed by the digital camera shown in FIG. 1A and FIG. 1B.
FIG. 4A to FIG. 4F are views showing examples of screens displayed on a display unit shown in FIG. 1B.
FIG. 5 is a flowchart showing a procedure of a photographing process in S318 in FIG. 3.
FIG. 6 is a view showing an example of an image file generated by the digital camera shown in FIG. 1A and FIG. 1B.

### DETAILED DESCRIPTION OF THE PREFERRED EMBODIMENTS

Hereafter, preferred embodiments will be described in detail by referring to the drawings. The following embodiments do not limit the scopes of the appended claims. Although a plurality of features are described in the embodiments, all of the plurality of features are not necessarily essential, and the plurality of features may be arbitrarily combined.

Hereinafter, an embodiment in which a content generation apparatus is applied to a digital camera capable of photographing a still image and recording a moving image will be described in detail with reference to the accompanying drawings.

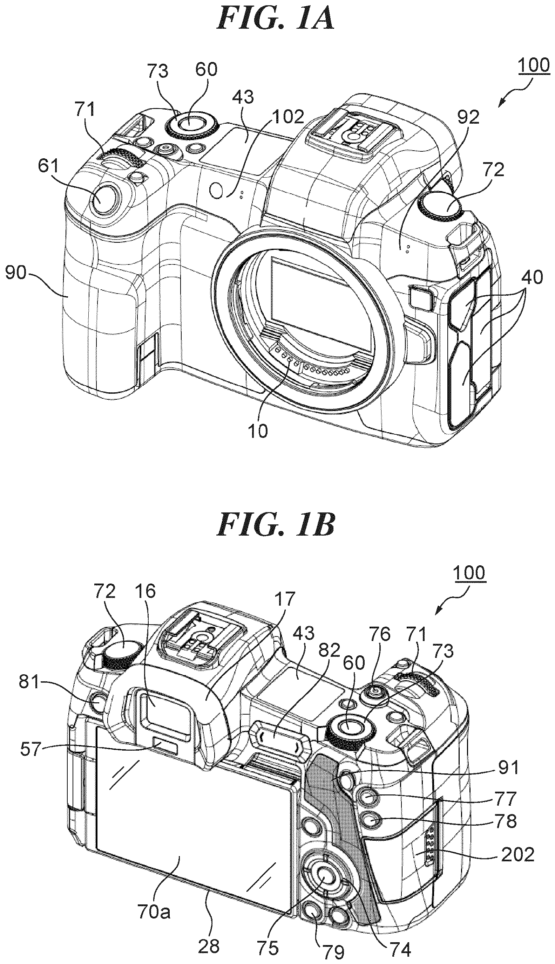

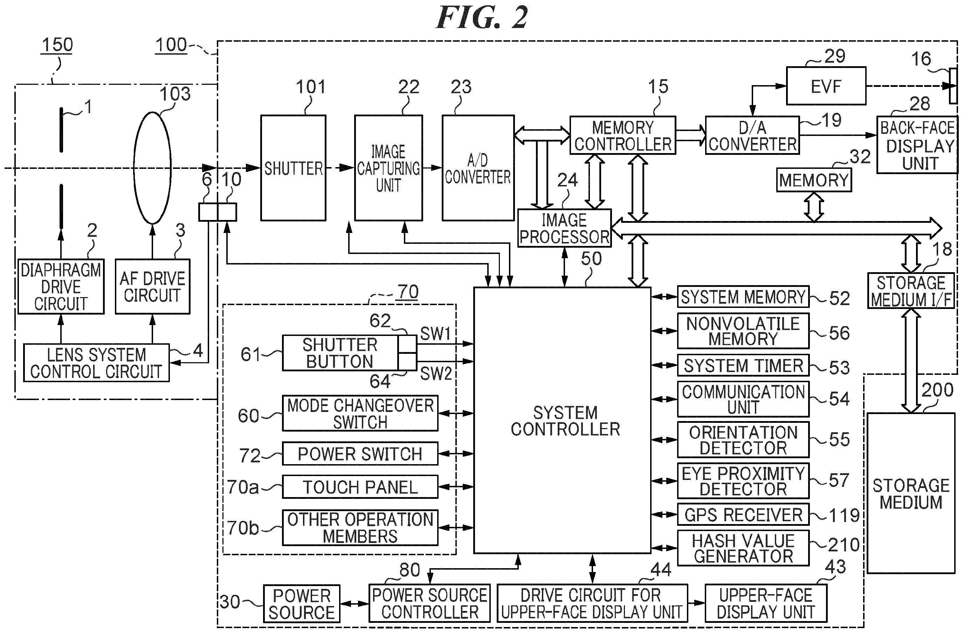

First, a configuration and functions of the digital camera 100 as the content generation apparatus according to this embodiment will be described with reference to FIG. 1A, FIG. 1B, and FIG. 2.

FIG. 1A is a front perspective view showing the digital camera 100 from which a lens unit 150 is detached. FIG. 1B is a rear perspective view showing the digital camera 100.

As shown in FIG. 1B, a back-face display unit 28 is separated from a finder and displays an image and various kinds of information. The back-face display unit 28 is a display device, such as an LCD, provided on a back face of a camera body. The back-face display unit 28 is provided with a touch panel 70a. The touch panel 70a is a touch operation member capable of detecting a contact (touch operation) on a display surface (touch operation surface) of the display unit 28.

An upper-face display unit 43 is provided on an upper surface of the digital camera 100 and displays various set values of the digital camera 100, such as a shutter speed and an aperture value. A shutter button 61 is an operation member for instructing photographing. A mode changeover switch 60 is an operation member for switching a mode among various modes. A terminal cover 40 is a cover for protecting a connector (not shown) to which a connection cable for connecting the digital camera 100 to an external apparatus is connected.

A main electronic dial 71 is a rotary operation member. A user can change the set values, such as the shutter speed, and the aperture value, by rotating the main electronic dial 71. A power switch 72 is an operation member for switching the power of the digital camera 100 between ON and OFF. The sub electronic dial 73 is a rotary operation member. The user can move a selection frame (cursor) and send an image by rotating the sub electronic dial 73. A four-direction key 74 is configured such that upper, lower, left, and right portions thereof can be pressed, and a process corresponding to a pressed portion of the four-direction key 74 can be executed. A set button 75 is a push button and is mainly used for fixing a selection item.

A moving image button 76 is used to instruct start or stop of moving image photographing (recording). An AE lock button 77 is a push button. The user can fix an exposure state by pressing the AE lock button 77 in a photographing standby state. An enlargement button 78 is an operation button for switching between ON and OFF of an enlargement mode for live view display (LV display) in a photographing mode. The user can enlarge or reduce a live view image (LV image) by operating the main electronic dial 71 after turning the enlargement mode ON. In a playback mode, the enlargement button 78 functions as an operation button for enlarging a playback image or increasing an enlargement ratio.

A playback button 79 is an operation button for switching between the photographing mode and the playback mode. When the playback button 79 is pressed during the photographing mode, the mode is shifted to the playback mode, and the latest image among images recorded in a recording medium 200 in FIG. 2, which will be described later, can be displayed on the back-face display unit 28.

A menu button 81 is a push button used when the user performs an instruction operation to display a menu screen. When the menu button 81 is pressed, the menu screen on which various settings can be made is displayed on the back-face display unit 28. The user can intuitively perform various settings on the menu screen displayed on the back-face display unit 28 while using the four-direction key 74 and the set button 75.

A touch bar 82 (multifunction bar: M-Fn bar) is a linear touch operation member (line touch sensor) capable of accepting a touch operation. The touch bar 82 is disposed at a position where the touch bar 82 can be touched by a thumb of a right hand in a state where a grip portion 90 is gripped by the right hand (in a state where the grip portion 90 is gripped by the little finger, the ring finger, and the middle finger of the right hand) so that the shutter button 61 can be pressed by the index finger of the right hand. That is, the touch bar 82 is disposed at the position so as to be operated in a state (photographing posture) where the user looks into a finder by contacting an eye to an eyepiece window 16 and can presses the shutter button 61 at any time. The touch bar 82 is an accepting unit capable of accepting a tap operation (an operation of touching and releasing within a predetermined period without moving a finger), a slide operation (an operation of touching and moving a touch position without releasing a finger) to left or right, and the like. The touch bar 82 is an operation member different from the touch panel 70a, and does not have a display function.

A communication terminal 10 is used for the digital camera 100 to communicate with the lens unit 150 in FIG. 2 described later. The eyepiece window 16 is a part of an eyepiece finder (a look-in finder) 17. The user can visually recognize a video displayed on an internal electronic view finder (EVF) 29 in FIG. 2 described later via the eyepiece window 16. An eye proximity detector 57 is an eye contact detection sensor that detects whether the eye of the user (photographing person) contacts the eyepiece window 16. A lid 202 is a cover of a slot for storing a recording medium 200 in FIG. 2 described later.

The grip portion 90 is a holding portion having a shape that is easy for the user to grip with the right hand when holding the digital camera 100. The shutter button 61 and the main electronic dial 71 are disposed at positions where they can be operated by the index finger of the right hand in the state where the digital camera 100 is held by gripping the grip portion 90 with the little finger, the ring finger, and the middle finger of the right hand. In the same state, the sub electronic dial 73 and the touch bar 82 are disposed at positions where they can be operated by the thumb of the right hand. A thumb rest portion (thumb standby position) 91 is a grip member provided at a position on the back face of the digital camera 100 where the thumb of the right hand gripping the grip portion 90 can be easily placed in a state where no operation members are operated. The thumb rest portion 91 is formed of a rubber member for enhancing a holding force (a grip feeling).

FIG. 2 is a block diagram showing a configuration example of the digital camera 100 shown in FIG. 1A and FIG. 1B. In FIG. 2, a lens unit 150 in which an interchangeable photographing lens is mounted is detachable from the digital camera 100. Although a lens 103 is generally constituted by a plurality of lenses, a single lens is shown here for simplicity. A communication terminal 6 enables the lens unit 150 to communicate with the digital camera 100, and a communication terminal 10 enables the digital camera 100 to communicate with the lens unit 150. The lens unit 150 communicates with a system controller 50 via the communication terminals 6 and 10. The lens unit 150 controls a diaphragm 1 via a diaphragm drive circuit 2 by an internal lens system control circuit 4. The lens unit 150 adjusts focus by displacing the position of the lens 103 via an AF drive circuit 3 by the lens system control circuit 4.

A shutter 101 is a focal plane shutter that can freely control exposure time of an image capturing unit 22 under the control of the system controller 50.

The image capturing unit 22 has an image sensor, such as a CCD or a CMOS, which converts an optical image into an electric signal. The image capturing unit 22 may include an image plane phase difference sensor that outputs defocus amount information to the system controller 50. An A/D converter 23 converts an analog signal output from the image capturing unit 22 into a digital signal.

An image processor 24 applies predetermined processes (resizing processes, such as pixel interpolation and reduction, a color conversion process) to data from the A/D converter 23 or data from a memory controller 15. The image processor 24 performs a predetermined calculation process using captured image data, and the system controller 50 performs exposure control and distance measurement control based on the calculation result obtained by the image processor 24. This allows an AF (autofocus) process, an AE (automatic exposure) process, an EF (flash pre-emission) process, etc. of a TTL (through-the-lens) method. The image processor 24 further performs a predetermined calculation process using the captured image data, and performs an AWB (auto white balance) process of the TTL method based on the obtained calculation result.

Output data from the A/D converter 23 is written to a memory 32 via the image processor 24 and a memory controller 15. Alternatively, the output data from the A/D converter 23 is written to the memory 32 via the memory controller 15 without passing through the image processor 24. The memory 32 stores the image data obtained by the image capturing unit 22 and converted into digital data by the A/D converter 23 and the image data to be displayed on the back-face display unit 28 or the EVF 29. The memory 32 has a storage capacity sufficient to store a predetermined number of still images, a predetermined time of moving images, and sound.

The memory 32 also serves as a memory for image display (video memory). A D/A converter 19 converts data for displaying an image stored in the memory 32 into an analog signal and supplies the analog signal to the back-face display unit 28 or the EVF 29. The image data for displaying written in the memory 32 is displayed on the back-face display unit 28 or the EVF 29 via the D/A converter 19. The back-face display unit 28 or the EVF 29 displays according to the analog signal from the D/A converter 19. The digital signal that has been A/D converted by the A/D converter 23 and stored in the memory 32 is converted into an analog signal by the D/A converter 19, and the analog signal is sequentially transferred to the back-face display unit 28 or the EVF 29 and displayed, whereby the live view (LV) display can be performed. Hereinafter, an image displayed in the live view display is referred to as a live view image (LV image).

The system controller 50 is configured by at least one processor and/or at least one circuit, and controls the entire digital camera 100. The system controller 50 is a processor and is also a circuit. The system controller 50 executes a program recorded in a nonvolatile memory 56 to achieve each process of this embodiment described later. The system controller 50 also performs display control by controlling the memory 32, the D/A converter 19, the back-face display unit 28, the EVF 29, etc.

A system memory 52 is, for example, a RAM. The system controller 50 develops constants and variables for the operation of the system controller 50, a program read from the nonvolatile memory 56 onto the system memory 52.

The nonvolatile memory 56 is an electrically erasable and programmable memory, such as an EEPROM. The nonvolatile memory 56 stores constants, programs, etc. for the operation of the system controller 50. The programs mentioned here are used for executing processes of various flowcharts described later in this embodiment.

A system timer 53 is a timekeeping unit that measures time used for various controls and time of a built-in clock.

A communication unit 54 transmits and receives a video signal and an audio signal to and from an external apparatus connected wirelessly or via a wired cable. The communication unit 54 can also be connected to a wireless local area network (LAN) or the Internet. The communication unit 54 can also communicate with an external apparatus using Bluetooth (registered trademark) or Bluetooth Low Energy.

The communication unit 54 can transmit an image (including an LV image) captured by the image capturing unit 22 and an image stored in the storage medium 200, and can also receive various kinds of information, such as image data and a moving image recording start instruction, from an external apparatus. When the communication unit 54 receives the moving image recording start instruction from the external apparatus, the system controller 50 can notify the user of the reception of the instruction by lighting a light emitting unit 102 (see FIG. lA) or by sounding an electronic sound using a loud speaker 92 (see FIG. 1A). The external apparatus that communicates with the communication unit 54 may be a smartphone, a tablet terminal, and a PC.

An orientation detector 55 detects an orientation of the digital camera 100 with respect to the gravity direction. Based on the orientation detected by the orientation detector 55, it is possible to determine whether the image captured by the image capturing unit 22 is an image photographed with the digital camera 100 held horizontally or an image photographed with the digital camera 100 held vertically. The system controller 50 can add orientation information corresponding to the orientation detected by the orientation detector 55 to an image file of an image captured by the image capturing unit 22, and can rotate and record the image. An acceleration sensor, a gyro sensor, or the like can be used as the orientation detector 55. Motions of the digital camera 100 (panning, tilting, lifting, stillness, etc.) can also be detected using the acceleration sensor or the gyro sensor as the orientation detector 55.

The eye proximity detector 57 is an eye proximity detection sensor that detects proximity (an eye proximity state) and separation (an eye separation state) of an eye (object) with respect to the eyepiece window 16 of the eyepiece finder 17. The system controller 50 switches a display state and a non-display state of the back-face display unit 28 and the EVF 29 according to the state detected by the eye proximity detector 57. Specifically, when switching of a display destination is set to automatic in the photographing standby state, the display destination is automatically switched between the back-face display unit 28 and the EVF 29. In the eye separation state, the back-face display unit 28 is served as the display destination and is set to the display state, and the EVF 29 is set to the non-display state. In the eye proximity state, the EVF 29 is served as the display destination and is set to the display state, and the back-face display unit 28 is set to the non-display state.

The eye proximity detector 57 may be an infrared proximity sensor that can detect proximity of some object to the eyepiece window 16 of the eyepiece finder 17 including the EVF 29. When an object approaches, infrared light projected from a light emitter (not shown) of the eye proximity detector 57 is reflected by the object and received by a light receiver (not shown) of the infrared proximity sensor. The distance to the approaching object from the eyepiece window 16 can be determined on the basis of an amount of infrared light received.

In this way, the eye proximity detector 57 detects the eye proximity by detecting the proximity distance of the object to the eyepiece window 16. When proximity of an object from the eye separation state to the eyepiece window 16 within a predetermined distance is detected, the eye proximity state to the eyepiece window 16 is detected. When the separation of the object from the eye proximity state by a predetermined distance or more is detected, the eye separation state is detected.

The threshold for detecting the eye proximity and the threshold for detecting the eye separation may be different, for example, by providing hysteresis. After the eye proximity is detected, the eye proximity state is kept until the eye separation is detected. After the eye separation is detected, the eye separation state is kept until the eye contact is detected. The infrared proximity sensor is an example, and another sensor may be employed as the eye proximity detector 57 as long as the sensor can detect a state that can be regarded as eye proximity.

The GPS receiver 119 receives GPS signals including position information and time information from GPS satellites (artificial satellites). The digital camera 100 specifies the position of the digital camera 100 and adjusts the reference time of the digital camera 100 based on the GPS signals received by the GPS receiver 119. The digital camera 100 can add information indicating the specified position and the photographing date and time based on the adjusted reference time to the photographed image.

The hash value generator 210 generates (calculates) a hash value by executing a hash function to the image file. Alternatively, the system controller 50 may generate the hash value instead of the hash value generator 210.

The upper-face display unit 43 displays various set values of the camera, such as a shutter speed and an aperture value, via a display drive circuit 44.

The power source controller 80 is configured by a battery detection circuit, a DC-DC converter, a switch circuit for switching a block to be energized, and detects whether a battery is attached, a type of the battery, and remaining battery level. The power source controller 80 controls the DC-DC converter on the basis of the detection result and an instruction from the system controller 50, and supplies a necessary voltage to units including the storage medium 200 for a necessary period. The power source 30 is constituted of a primary battery, such as an alkaline battery or a lithium battery, a secondary battery, such as a NiCd battery or a NiMH battery, or a Li battery, or an AC adapter.

A storage medium I/F 18 is an interface with the storage medium 200. The storage medium 200 is a memory card, a hard disk, or the like for recording a photographed image, and is constituted by a semiconductor memory, a magnetic disk, or the like.

An operation unit 70 is an input unit that receives an operation from a user, and is used to input various operation instructions to the system controller 50. As shown in FIG. 2, the operation unit 70 includes the shutter button 61, the mode changeover switch 60, the power switch 72, the touch panel 70a, other operation members 70b, etc. The other operation members 70b include the main electronic dial 71, the sub electronic dial 73, a four-direction key 74, the set button 75, the moving image button 76, the AE lock button 77, the enlargement button 78, the playback button 79, the menu button 81, the touch bar 82, etc.

The shutter button 61 includes a first shutter switch 62 and a second shutter switch 64. The first shutter switch 62 is turned on in middle of a press operation of the shutter button 61, that is, by what is called a half-press (a photographing preparation instruction), and generates a first shutter switch signal SW1. The system controller 50 starts photographing preparation operations, such as an AF process, AE processing, AWB process, and EF process, in response to the first shutter switch signal SW1.

The second shutter switch 64 is turned on by completion of the press operation of the shutter button 61, that is, by what is called a full press (a photographing instruction), and generates a second shutter switch signal SW2. The system controller 50 starts a series of operations of a photographing process from reading of a signal from the image capturing unit 22 to writing of a captured image as an image file in the storage medium 200 in response to the second shutter switch signal SW2.

The mode changeover switch 60 switches the operation mode of the system controller 50 to any one of a still image photographing mode, a moving image photographing mode, a playback mode, etc. The still image photographing mode includes an auto photographing mode, an auto scene determination mode, a manual mode, an aperture priority mode (Av mode), a shutter speed priority mode (Tv mode), and a program AE mode (P mode). Further, there are various scene modes, which are photographing settings for respective photographing scenes, custom modes, etc. The user directly switches to any of these modes by operating the mode changeover switch 60. Alternatively, a screen showing the list of the photographing modes may be displayed in response to the operation of the mode changeover switch 60. The user switches to any one of the displayed modes by using another operation member. Similarly, the moving image photographing mode may include a plurality of modes.

The touch panel 70a is a touch sensor that detects various touch operations on the display surface of the back-face display unit 28 (the operation surface of the touch panel 70a). The touch panel 70a and the back-face display unit 28 can be integrally configured. For example, a light transmittance of the touch panel 70a is set so as not to disturb the display of the back-face display unit 28. The touch panel 70a is attached to an upper layer of the display surface of the display unit 28. Then, an input coordinate on the touch panel 70a and a display coordinate on the display surface of the back-face display unit 28 are associated with each other. This provides a GUI (graphical user interface) that can be operated as if the user can directly operate the screen displayed on the back-face display unit 28.

The system controller 50 can detect the following operations or states on the touch panel 70a.
(1) A finger or a pen that has not touched the touch panel 70a newly touches the touch panel 70a. That is, the start of a touch (hereinafter referred to as "touch-down").
(2) A finger or a pen keeps touching the touch panel 70a (hereinafter referred to as "touch-on").
(3) A finger or a pen is moving while touching the touch panel 70a (hereinafter referred to as "touch-move").
(4) A finger or a pen that has been touching the touch panel 70a is released from the touch panel 70a. That is, the end of the touch (hereinafter referred to as "touch-up").
(5) Nothing touches the touch panel 70a (hereinafter referred to as "touch-off').

When the touch-down is detected, the touch-on is also detected at the same time. After the touch-down, the touch-on is continuously detected generally unless the touch-up is detected. When the touch-move is detected, the touch-on is also detected at the same time. Even if the touch-on is detected, the touch-move is not detected unless the touch position is moving. When the touch-up of all the fingers or the pen that have been touching is detected, the touch-off is detected.

The system controller 50 is notified of these operations and states and the position coordinate of the touched position by the finger or the pen on the touch panel 70a via an internal bus. Then, the system controller 50 determines what kind of operation (touch operation) has been performed on the touch panel 70a based on the notified information. As for the touch-move, the moving amount of the finger or the pen moving on the touch panel 70a can be determined for each of a vertical component and a horizontal component on the touch panel 70a based on the change of the position coordinate.

When the touch-move of a predetermined distance or more is detected, it is determined that a slide operation has been performed. An operation of quickly moving a finger on the touch panel 70a by a certain distance while keeping the finger in contact with the touch panel and then releasing the finger from the touch panel is called a flick. In other words, the flick is an operation of quickly tracing the touch panel 70a with a finger as if flicking the touch panel. When the touch-move of the predetermined distance or more at a predetermined speed or more is detected and the touch-up is detected after that, it can be determined that the flick has been performed (it can be determined that a flick has been performed following a slide operation).

Further, a touch operation of touching a plurality of points (for example, two points) together (multi-touch) and bringing the touch positions closer to each other is referred to as a pinch-in, and a touch operation of moving the touch positions away from each other is referred to as a pinch-out. The pinch-out and the pinch-in are collectively referred to as a pinch operation. The touch panel 70a may be any type of touch panel among various types of touch panels, such as a resistive film type, a capacitive type, a surface-acoustic-wave type, an infrared type, an electromagnetic-induction type, an image recognition type, and an optical sensor type. There are a method of detecting a touch by a contact with the touch panel and a method of detecting a touch by a proximity of a finger or a pen to the touch panel, and any method may be used.

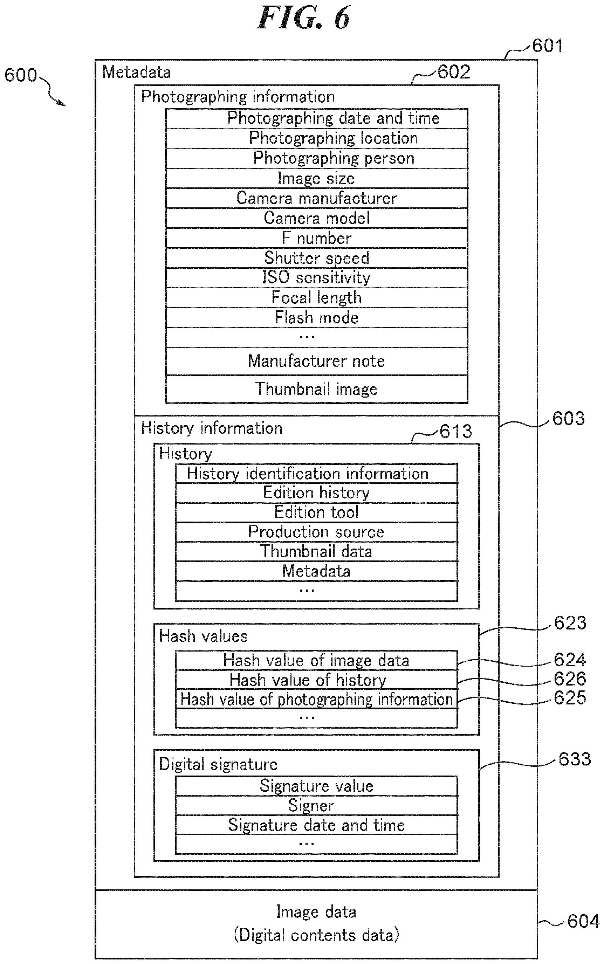

Next, the photographing in a case where the digital camera 100 enables an authenticity guaranteeing mode will be described. In this embodiment, when the photographing is performed in enabling the authenticity guaranteeing mode, history information 603 in FIG. 6 described later is included in an image file generated by the photographing. In the meantime, when the photographing is performed in disabling the authenticity guaranteeing mode, the history information 603 in FIG. 6 described later is not included in the image file generated by the photographing. In this embodiment, it is possible to determine whether malicious falsification has been performed based on whether hash values and a signature value included in the history information 603 have been changed.

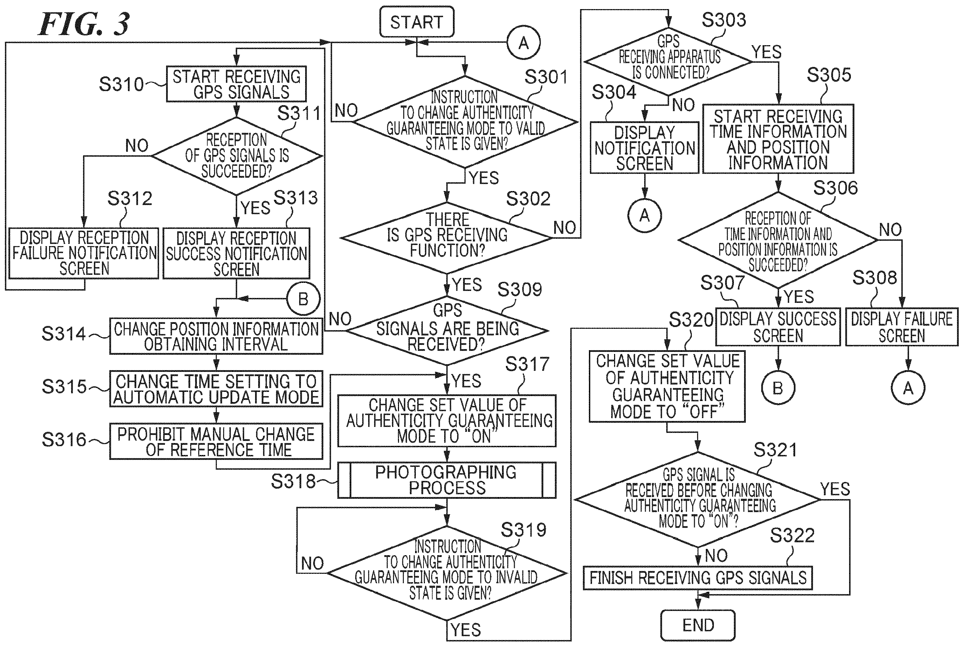

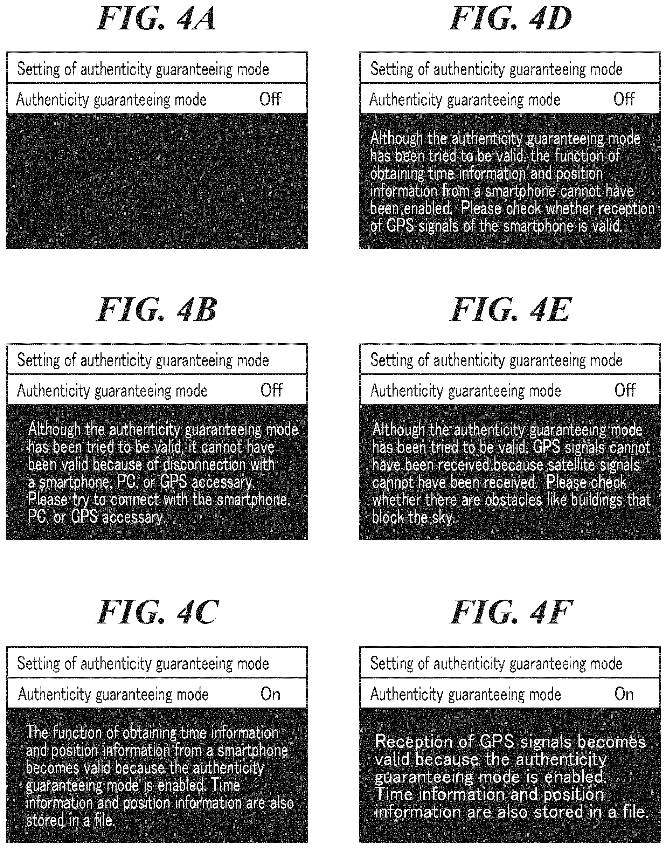

FIG. 3 is a flowchart showing a procedure of a photographing control process executed by the digital camera 100 shown in FIG. 1A and FIG. 1B. The photographing control process in FIG. 3 shows a series of processes in a case where the digital camera 100 enables the authenticity guaranteeing mode according to an instruction received from the user until completing the photographing. At the start of the photographing control process in FIG. 3, the digital camera 100 shall disable the authenticity guaranteeing mode and a setting screen shown in FIG. 4A shall be displayed on the back-face display unit 28. The setting screen shown in FIG. 4A is used for the user to issue an instruction to enable or disable the authenticity guaranteeing mode. The photographing control process in FIG. 3 is achieved by the system controller 50 loading a program stored in the nonvolatile memory 56 into the system memory 52 and executing the program in turning ON the power switch 72.

In FIG. 3, the system controller 50 first determines in S(step)301 whether an instruction to enable the authenticity guaranteeing mode is given on the setting screen shown in FIG. 4A. The system controller 50 waits until the instruction to enable the authenticity guaranteeing mode is given on the setting screen shown in FIG. 4A, and when the instruction to enable the authenticity assurance mode is given (YES in S301), the photographing control process proceeds to S302.

In S302, the system controller 50 determines whether the digital camera 100 has a GPS function. For example, when the digital camera 100 does not include the GPS receiver 119 or when a GPS accessory is not connected to the digital camera 100, it is determined that the digital camera 100 does not include the GPS function. In this case, the photographing control process proceeds to S303. The GPS accessory is an accessory component for extending the GPS function to the digital camera 100, and the process of the GPS accessory receiving GPS signals from GPS satellites is controlled by the system controller 50.

In S303, the system controller 50 determines whether a GPS receiving apparatus is connected to the digital camera 100. The GPS receiving apparatus is a communication apparatus having the GPS function, such as a smartphone, a tablet terminal, or a PC, and a process of receiving the GPS signals from the GPS satellites by the communication apparatus is controlled by a controller of the communication apparatus. When it is determined that no GPS receiving apparatus is connected to the digital camera 100, the photographing control process proceeds to S304.

In S304, the system controller 50 displays a notification screen shown in FIG. 4B on the back-face display unit 28. The notification screen includes a message prompting the user to connect a GPS receiving apparatus or a GPS accessory to the digital camera 100. Thereafter, the photographing control process returns to S301.

When it is determined in S303 that a GPS receiving apparatus is connected to the digital camera 100, the photographing control process proceeds to S305.

In S305, the system controller 50 starts receiving time information and position information from the GPS receiving apparatus connected to the digital camera 100. The time information received from the GPS receiving apparatus is time information included in the GPS signals received from the GPS satellites by the GPS receiving apparatus. The position information received from the GPS receiving apparatus is included in the GPS signals received by the GPS receiving apparatus from the GPS satellites and indicates the position of the GPS receiving apparatus. That is, the position information received from the GPS receiving apparatus is substantially information indicating the position of the digital camera 100 connected to the GPS receiving apparatus.

Next, the system controller 50 determines in S306 whether the time information and the position information have been successfully received from the GPS receiving apparatus. When it is determined that the time information and the position information have been successfully received from the GPS receiving apparatus, the photographing control process proceeds to S307.

In S307, the system controller 50 displays a success screen shown in FIG. 4C on the back-face display unit 28. The success screen includes a message indicating that the function of obtaining time information and position information from the GPS receiving apparatus is valid. Thereafter, the photographing control process proceeds to S314 described below.

In S306, when it is determined that the reception of the time information and the position information from the GPS receiving apparatus has failed, the photographing control process proceeds to S308. An example of a failure to receive time information and position information from the GPS receiving apparatus is when the GPS function is invalid in the GPS receiving apparatus.

In S308, the system controller 50 displays a failure screen shown in FIG. 4D on the back-face display unit 28. The failure screen includes a message indicating a measure for successfully receiving the time information and the position information, for example, a message prompting the user to check whether the GPS function is valid in the GPS receiving apparatus. Thereafter, the photographing control process returns to S301.

When the digital camera 100 includes the GPS receiver 119 or when the GPS accessory is connected to the digital camera 100 that does not include the GPS receiver 119, it is determined in S302 that the digital camera 100 includes the GPS function. In this case, the photographing control process proceeds to S309.

In S309, the system controller 50 determines whether the GPS signals are being received. When it is determined that the GPS signals are not being received, the system controller 50 enables the GPS function in the digital camera 100. Thereafter, the photographing control process proceeds to S310.

In S310, the system controller 50 controls the GPS receiver 119 or the GPS accessory to start receiving the GPS signals from the GPS satellites. Next, the system controller 50 determines in S311 whether reception of the GPS signals is succeeded. When it is determined that the reception of the GPS signals is failed, the photographing control process proceeds to S312. For example, a failure in reception of GPS signals is a case where the user who carries the digital camera 100 is indoors or underground and cannot correctly receive signals from GPS satellites.

In S312, the system controller 50 displays a reception failure notification screen shown in FIG. 4E on the back-face display unit 28. The reception failure notification screen includes a message indicating that the reception of the GPS signals is failed and a message indicating a measure for making the reception of the GPS signal successful. Thereafter, the photographing control process returns to S301. As described above, in this embodiment, when the digital camera 100 fails to receive the GPS signals from the GPS satellites or fails to receive the time information and the position information from the GPS receiving apparatus (NO in S306), the authenticity guaranteeing mode is kept in the invalid state. This can prevent generation of an image file including the photographing date and time based on an inaccurate reference time that is not set using time information obtained from the outside.

In the meantime, when it is determined in S311 that the reception of the GPS signals is succeeded, the photographing control process proceeds to S313. In S313, the system controller 50 displays a reception success notification screen shown in FIG. 4F on the back-face display unit 28. The notification screen includes, for example, a message indicating that the reception of the GPS signals is enabled by enabling the authenticity guaranteeing mode.

Next, in S314, the system controller 50 changes an interval between timings at which the position information is obtained from the outside (hereinafter referred to as "a position information obtaining interval") to be shorter than an interval set in advance. The position information obtaining interval is an interval between timings at which the GPS receiver 119 or the GPS accessory receives the GPS signals including the position information of the digital camera 100 from the GPS satellites. Alternatively, the position information obtaining interval is an interval between timings at which the digital camera 100 receives the position information from the GPS receiving apparatus. The position information received from the GPS receiving apparatus is, as described above, the position information about the GPS receiving apparatus included in the GPS signals received by the GPS receiving apparatus from the GPS satellites, and is substantially the position information about the digital camera 100 connected to the GPS receiving apparatus. In S314, for example, the position information obtaining interval is changed to one second, which is the shortest interval that can be set in the digital camera 100. This enables obtainment of more accurate position information about the digital camera 100.

Next, in the S315, the system controller 50 changes a time setting mode to an automatic update mode. When the time setting mode is changed to the automatic update mode, the reference time in the digital camera 100 is adjusted using the time information obtained from the outside. The time information obtained from the outside is, for example, time information included in the GPS signals received by the GPS receiver 119 or the GPS accessory. The time information obtained from the outside is time information obtained from the GPS receiving apparatus connected to the digital camera 100 and is time information included in the GPS signals received by the GPS receiving apparatus from the GPS satellites.

Next, in S316, the system controller 50 prohibits manual change of the reference time. This can avoid a situation in which a malicious user changes the reference time of the digital camera 100 to a time different from the actual time and the date and time different from the actual date and time is assigned as the photographing date and time to an image file obtained by the photographing. Thereafter, the photographing control process proceeds to S317. In addition, when it is determined in S309 that the GPS signals are being received, the photographing control process also proceeds to S317.

In S317, the system controller 50 changes a set value of the authenticity guaranteeing mode to "ON" indicating that the authenticity guaranteeing mode is valid. The changed set value is stored in the memory 32. Although the configuration in which the set value of the authenticity guaranteeing mode is not changed to "ON" when the GPS receiver 119 fails to receive the GPS signals or when the reception of the time information and the position information from the GPS receiving apparatus is failed has been described in this embodiment, this configuration is not limiting. For example, in the above-described case, when the user changes the reference time in the digital camera 100 after changing the set value of the authenticity guaranteeing mode to "ON", the change of the reference time by the user may be recorded in photographing information 602 in FIG. 6 described below. This enables to notify another user who browses an image file generated by the digital camera 100 in the state where the reference time in the digital camera 100 has been changed by the photographing person that there is a concern that this image file has been generated at a time different from the actual time.

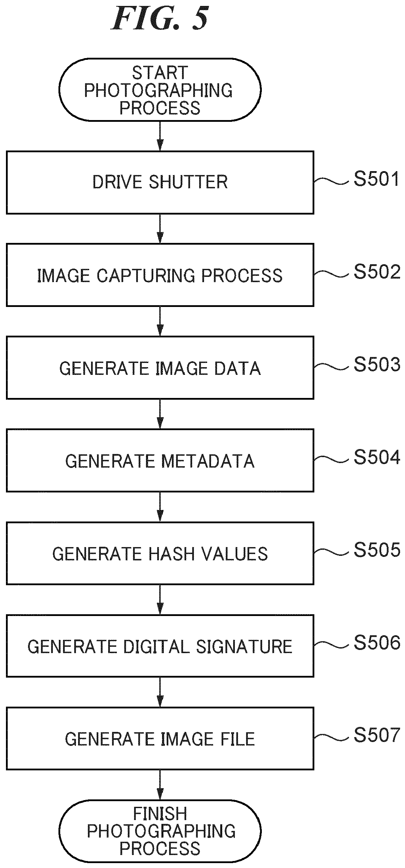

Next, in S318, the system controller 50 executes a photographing process in FIG. 5 described later. Next, the system controller 50 determines in S319 whether an instruction to disable the authenticity guaranteeing mode is given. The system controller 50 waits until the instruction to disable the authenticity guaranteeing mode is given, and when the instruction to disable the authenticity guaranteeing mode is given (YES in S319), the photographing control process proceeds to S320.

In S320, the system controller 50 changes the set value of the authenticity guaranteeing mode to "OFF" indicating that the authenticity guaranteeing mode is invalid. The changed set value is stored in the memory 32.

Next, in S321, the system controller 50 determines whether the GPS signals are received before the set value of the authenticity guaranteeing mode is changed to "ON" in S317. When it is determined that the GPS signals are received before the authenticity guaranteeing mode is changed to "ON" in S317, the photographing control process is terminated. When it is determined that the GPS signals are not received before the authenticity guaranteeing mode is changed to "ON" in S317, the photographing control process proceeds to S322.

In S322, the system controller 50 disables the GPS function and ends the reception of the GPS signals. In S322, the setting that has been automatically changed along with the success of the reception of the GPS signals may be returned to the original setting, for example, by allowing a manual change of the reference time. Thereafter, the photographing control process is terminated.

FIG. 5 is a flowchart showing the procedure of the photographing process in S318 in FIG. 3. The photographing process in FIG. 5 is started in receiving a photographing start operation, such as a full press of the shutter button 61, and is ended in receiving a photographing end operation, such as a stop of the press of the shutter button 61.

In S501 in FIG. 5, the system controller 50 first drives the shutter 101 arranged on the object side of the image capturing unit 22 in order to control the exposure time. Next, in the S502, the system controller 50 performs an image capturing process in which the image capturing unit 22 converts light from the object received via the shutter 101 into an electrical signal (analog image data). Next, in S503, the system controller 50 applies image processes, such as a development process and an encoding process, to the electrical signal obtained by the image capturing process in S502, and generates image data 604 in FIG. 6.

Next, in S504, the system controller 50 generates metadata 601 in FIG. 6. The metadata 601 is data constituting an image file 600 in FIG. 6 generated by the digital camera 100, and includes the photographing information 602 and the history information 603.

The photographing information 602 is information at the time of execution of the image capturing process for generating the image data 604, and includes, for example, a photographing date and time, a photographing person, an image size, a manufacturer or a model of the digital camera 100, various photographing parameters set at the time of photographing, a photographing location, a thumbnail image, etc. The photographing information 602 is generated in accordance with a predetermined technical standard, for example, the EXIF (Exchangeable Image File) format.

The photographing date and time included in the photographing information 602 is determined based on the reference time that has been adjusted using the time information obtained from the outside. The photographing location included in the photographing information 602 is the position information included in the GPS signals received by the digital camera 100 from the GPS satellites or the position information obtained from the GPS receiving apparatus connected to the digital camera 100. The GPS receiving apparatus receives the GPS signals including the position information from the GPS satellites. In addition, when the photographing date and time is manually input, information indicating that the photographing date and time is manually input may be recorded in the photographing information 602.

The history information 603 is information for proving credibility of the image data 604, and is used when verifying the source and history of the image data 604. The history information 603 is generated in accordance with a predetermined technical standard, for example, C2PA (Coalition for Content Provenance and Authenticity), and has a prescribed structure. The history information 603 includes a history (assertion) 613, and hash values 623 and a digital signature 633 for certifying the history 613.

The history 613 includes history identification information (a manifest ID) for uniquely identifying the history, edition history information indicating an editing content of the image data 604, edition tool information indicating a tool used for the editing, information about a creator of the image data 604, etc. Since the image data 604 generated in S503 is just generated by photographing and is not edited, information indicating "generated" is recorded in the edition history, and information indicating the digital camera 100 is recorded in the editing tool. Further, when thumbnail data and metadata in photographing and editing are included in the history 613, it is possible to use them for comparison and verification of a changed portion.

Referring back to FIG. 5, the system controller 50 generates the hash values 623 in S505. Specifically, the system controller 50 executes a hash function to the binary data of the image data 604 and the history 613, and generates a hash value 624 of the image data and a hash value 626 of the history. The system controller 50 also executes the hash function to the binary data of the photographing information 602 to generate a hash value 625 of the photographing information. In addition, hash values may be generated for finer units, such as the edition history, the creator, the thumbnail data, and the metadata, in order to detect falsification of the history 613 in the finer units.

Then, in S506, the system controller 50 generates the digital signature 633. The digital signature 633 includes information indicating a signature value, a signer, and a signature date and time. The signature value is generated by encrypting the hash values 623 generated in S505 using a secret key prepared in advance. A public key paired with the secret key used here is also included in the digital signature 633. In order to prove that the public key is reliable, information indicating the manufacturer of the digital camera 100 as the signer, or a public key certificate indicating that the public key has been authenticated by a certificate authority may be included in the digital signature 633. By attaching the digital signature 633 including such a signer to the image file 600, it is possible to indicate that the image file is reliable. The model name of the digital camera 100 may be used as the signer instead of the manufacturer. The signature date and time is the date and time at the time when the generation of the digital signature 633 is completed. The photographing date and time may also be included in the history 613.

Next, in S507, the system controller 50 generates the image file 600 by adding the metadata 601 including the photographing information 602 and the history information 603 to the image data 604. Here, the image file 600 is generated in accordance with the JPEG format when the image data 604 is a still image, and in accordance with the MPEG format when the image data is a moving image. Thereafter, the photographing process is ended.

As described above, in this embodiment, when the digital camera 100 performs photographing in the authenticity guaranteeing mode, the image file 600 is generated. The image file 600 may be edited. When the image file 600 is edited by a legitimate procedure using an authorized editing tool, the history information 603 is newly generated in accordance with a predetermined technical standard based on the editing content, and is added to the metadata 601 of the image file 600. The history information 603 is newly generated every time the image file 600 is edited, and is added to the metadata 601 of the image file 600. In the meantime, when the image file 600 is edited by using an unauthorized editing tool or by an unauthorized procedure, the history information 603 may not be added to the image file 600 or the history information 603 added to the image file 600 may not match a predetermined technical standard.

Further, the generation of a hash value or a signature value allows to detect falsification of the image file 600. For example, the hash function is executed to the binary data of the image data 604 of the image file 600 to generate a hash value. Then, the generated hash value is compared with the hash value 624 of the image data of the image file to be determined. This enables verification of whether the image data has been falsified.

Similarly, the hash function is executed to the binary data of the photographing information 602 of the image file 600 to generate a hash value. The generated hash value is compared with the hash value 625 of the photographing information of the image file to be determined. This enables verification of whether the photographing information including the photographing date and time, the photographing location, etc. has been falsified.

Moreover, the hash function is executed to the binary data of the history 613 to generate a hash value. Then, the generated hash value is compared with the hash value 626 of the history of the image file to be determined. This enables verification of whether the history information 603 has been falsified.

At this time, the binary data to be compared may be compared for each of finer units, such as the edition history, the creator, the thumbnail data, and the metadata. The signature value can be decrypted by the public key, and it can be determined that the verification of the signature value is succeeded when the hash values match. In this way, a mechanism for detecting falsification can be incorporated in an image file.

According to the above-described embodiment, when an instruction to change the authenticity guaranteeing mode from an invalid state to a valid state is received and an instruction to generate an image file is received, the image file 600 including the photographing date and time based on the reference time that has been adjusted using the time information received from the outside is generated. Thus, the image file 600 can include the photographing date and time based on the reference time that is not falsified, and the authenticity of the generation time of the image file 600 can be guaranteed.

In the above-described embodiment, the image file 600 includes the hash values 623 generated in S505 and the digital signature 633 generated in S506 in addition to the photographing date and time. This ensures the authenticity of the image data included in the image file 600 in addition to the generation time of the image file 600.

In the above-described embodiment, the time information received from the outside is the time information included in the GPS signals received by the GPS receiver 119 from the GPS satellites. Thus, the reference time can be adjusted with high accuracy.

In the above-described embodiment, the time information received from the outside is the time information included in the GPS signals received from the GPS satellites by the GPS accessory connected to the digital camera 100 in the configuration in which the digital camera 100 does not include the GPS receiver 119. This enables time adjustment of the reference time with high accuracy in the configuration in which the digital camera 100 does not include the GPS receiver 119.

In the above-described embodiment, when the instruction to change the authenticity guaranteeing mode from the valid state to the invalid state is received, the reception of the GPS signals from the GPS satellites by the GPS receiver 119 is stopped. Thus, the authenticity of the generation time of the image file 600 is guaranteed when the authenticity guaranteeing mode is valid, and unnecessary power consumption can be reduced when the authenticity guaranteeing mode is invalid.

When the set value of the authenticity guaranteeing mode is "OFF" and the photographing process is executed after the process in S322, the system controller 50 executes the same processes as those from S501 to S503 in FIG. 5, and then adds the photographing information 602 to the image data 604 as the metadata 601 to generate the image file 600. That is, the processes in S505 and S506 are not executed, and the history information 603 and the information about the guarantee of the authenticity of the image data, such as the hash values and the digital signature, are not added. Therefore, in the above-described embodiment, when the authenticity of the photographing date and time cannot be guaranteed, it is possible not to guarantee the authenticity of the image data.

In the above-described embodiment, the time information received from the outside is the time information received from the GPS receiving apparatus connected to the digital camera 100, and the time information is included in the GPS signals received by the GPS receiving apparatus from the GPS satellites. Thus, even if the digital camera 100 does not have the GPS function, the photographing date and time based on the reference time that is not falsified can be included in the image file 600.

In the above-described embodiment, when the instruction to enable the authenticity guaranteeing mode that has been invalid is accepted, a user is prohibited from changing the reference time. This can prevent a malicious user from falsifying the reference time.

In the above-described embodiment, when the instruction to change the authenticity guaranteeing mode from the invalid state to the valid state is accepted and the reception of time information from the outside fails, the user is notified of the measure for successfully receiving time information from the outside. This allows the user who performs photographing with the digital camera 100 to easily cope with the process of successfully receiving time information, which is necessary to guarantee the authenticity of the generation time of the image file 600, from the outside.

In the above-described embodiment, the digital camera 100 is an image capturing apparatus that captures an image of an object to generate image data and generates an image file including the image data as a content. This can guarantee the authenticity of the generation time of the image file 600 in such an image capturing apparatus.

In this embodiment, when operating in the authenticity guaranteeing mode, the digital camera 100 enables the GPS function and receives the GPS signals to set and update the accurate time. However, other methods may be used. For example, when the digital camera 100 operates in the authenticity guaranteeing mode, a Wi-Fi communication function may be enabled. In such a case, the digital camera 100 may be connected to a Wi-Fi router to receive time information, and the digital camera 100 may adjust the reference time based on the received time information. This can guarantee the authenticity of the generation time of the content in the apparatus that does not have the GPS function but has the Wi-Fi communication function. The Wi-Fi router periodically accesses a network time protocol (NTP) server to adjust the time, and thereby holds the accurate time.

In a configuration in which the digital camera 100 operates in the authenticity guaranteeing mode and obtains the time information from an external apparatus, such as a smartphone or a PC, connected to the digital camera 100, the time information may be time information received by the external apparatus from a Wi-Fi router. This can guarantee the authenticity of the generation time of the content in the configuration to communicate with the external apparatus that does not have the GPS function but has the Wi-Fi communication function.

When the digital camera 100 operates in the authenticity guaranteeing mode, a time adjustment function of a radio clock may be enabled. In such a case, the reference time may be adjusted based on date and time information (time code) included in radio waves received from a standard radio wave transmission station. This can guarantee the authenticity of the generation time of the content even if the GPS function is not provided.

When the digital camera 100 operates in the authenticity guaranteeing mode, "automatic setting of date and time" may be enabled to automatically obtain time information from the GPS signals, the Wi-Fi router, the standard time signal transmission station (NITZ), or the like as described above to adjust the reference time. This allows the digital camera 100 to guarantee the authenticity of the generation time of the content.

Further, when the digital camera 100 changes the "automatic setting of date and time" from the valid state to the invalid state in response to the user's operation, the authenticity guaranteeing mode may also be automatically changed from the valid state to the invalid state. In such a case, a message indicating that the authenticity guaranteeing mode is also changed from the valid state to the invalid state may be displayed on the screen to notify the user before changing the "automatic setting of date and time" from the valid state to the invalid state.

Although the configuration to generate an image file as an example of a content has been described in this embodiment, a content is not limited to an image file. The technique is also applicable to a configuration to generate an audio file including audio data, for example.

Although the digital camera has been described as an example of the content generation apparatus in this embodiment, the content generation apparatus is not limited to the digital camera. The content generation apparatus may be a smartphone, a tablet terminal, a PC, or the like that can generates a content and allows a user to change the reference time in the content generation apparatus used for determining generation time of the content.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A content generation apparatus (100) comprising:
a unit (61) configured to receive an instruction to generate a content (600) from a user;
a unit (70a, S301, S319) configured to receive an instruction to change an authenticity guaranteeing mode for guaranteeing authenticity of the content to a valid state or an invalid state from the user; and
a controller (50, S507) configured to control to generate a content (600) including generation time (602) of the content based on reference time that has been adjusted using time information received from an outside in a case where an instruction to change the authenticity guaranteeing mode from the invalid state to the valid state is received and an instruction to generate the content is received.

2. The content generation apparatus (100) according to claim 1, wherein the controller (50) generates the content (600) including the generation time (602), a hash value (623) generated by executing a hash function to the content, and a digital signature (633) generated by encrypting the hash value using a secret key in a case where the instruction to change the authenticity guaranteeing mode from the invalid state to the valid state is received and the instruction to generate the content is received.

3. The content generation apparatus (100) according to claim 1 or 2, further comprising a reception unit (119) configured to receive a signal from an artificial satellite;
wherein the time information received from the outside is time information included in the signal received by the reception unit (119) from the artificial satellite.

4. The content generation apparatus (100) according to claim 3,
wherein reception of the signal from the artificial satellite by the reception unit (119) is stopped in a case where an instruction to change the authenticity guaranteeing mode from the valid state to the invalid state.

5. The content generation apparatus (100) according to claim 1or 2, wherein the time information received from the outside is time information included in a signal received from an artificial satellite by an accessory component that is connected to the content generation apparatus for extending a GPS function.

6. The content generation apparatus (100) according to claim 1 or 2, wherein the time information received from the outside is time information received from an external apparatus connected to the content generation apparatus,
wherein the time information received from the external apparatus is time information included in a signal received by the external apparatus from an artificial satellite, and
wherein a controller included in the external apparatus controls a process of receiving a signal from the artificial satellite.

7. The content generation apparatus (100) according to any one of claims 1 to 6, wherein the user can change the reference time.

8. The content generation apparatus (100) according to claim 7, wherein the content generation apparatus is controlled to prohibit the user from changing the reference time (S316) in a case where the instruction to change the authenticity guaranteeing mode from the invalid state to the valid state is received.

9. The content generation apparatus (100) according to any one of claims 1 to 8, wherein the controller (50) generates the content (600) including position information obtained from the outside, and
wherein an interval between timings at which the position information is obtained from the outside is changed to be shorter than an interval set in advance (S314) in a case where the instruction to change the authenticity guaranteeing mode from the invalid state to the valid state is received.

10. The content generation apparatus (100) according to any one of claims 1 to 9, wherein the authenticity guaranteeing mode is kept in the invalid state in a case where the instruction to change the authenticity guaranteeing mode from the invalid state to the valid state is received and the reception of the time information from the outside fails.

11. The content generation apparatus (100) according to any one of claims 1 to 7, 9, and 10, wherein the controller (50) generates the content (600) including information indicating that the reference time has been changed by the user in a case where the instruction to change the authenticity guaranteeing mode from the invalid state to the valid state is received, reception of time information from the outside fails, and the user changes the reference time.

12. The content generation apparatus (100) according to any one of claims 1 to 11, wherein a measure for successfully receiving the time information from the outside is indicated (S308) in a case where the instruction to change the authenticity guaranteeing mode from the invalid state to the valid state is received and the reception of the time information from the outside fails.

13. The content generation apparatus (100) according to any one of claims 1 to 12 comprising an image capturing apparatus that generates image data by capturing an image of an object and generates an image file (600) including the image data (604) as the content.

14. A control method for a content generation apparatus (100), the control method comprising:
a step (S318) of receiving an instruction to generate a content (600) from a user;
a step (S301, S319) of receiving an instruction from the user to change an authenticity guaranteeing mode for ensuring authenticity of the content to a valid state or an invalid state; and
a step (S507) of generating the content (600) including generation time (602) of the content based on reference time that has been adjusted using time information received from an outside in a case where an instruction to change the authenticity guaranteeing mode from the invalid state to the valid state is received and an instruction to generate the content is received.

15. A control program causing a computer to execute a control method for a content generation apparatus (100), the control method comprising:
a step (S318) of receiving an instruction to generate a content (600) from a user;
a step (S301, S319) of receiving an instruction from the user to change an authenticity guaranteeing mode for ensuring authenticity of the content to a valid state or an invalid state; and
a step (S507) of generating the content (600) including generation time (602) of the content based on reference time that has been adjusted using time information received from an outside in a case where an instruction to change the authenticity guaranteeing mode from the invalid state to the valid state is received and an instruction to generate the content is received.
